# EUROPEAN PATENT SPECIFICATION

(11) **EP 4 032 778 B1**
(45) Date of publication and mention of the grant of the patent: **12.06.2024**
(21) Application number: 21849667.7
(22) Date of filing: 30.03.2021
(51) Int. Cl.: B61F 7/00

(54) **WHEEL MOUNTING BUSHING FOR VARIABLE-GAUGE WHEELSET, AND VARIABLE-GAUGE WHEELSET**
RADBEFESTIGUNGSBUCHSE FÜR EINEN RADSATZ MIT VERÄNDERLICHER SPURWEITE UND RADSATZ MIT VERÄNDERLICHER SPURWEITE
BAGUE DE MONTAGE DE ROUE POUR ESSIEU MONTÉ À JAUGE VARIABLE, ET ESSIEU MONTÉ À JAUGE VARIABLE

(30) Priority: 28.07.2020 CN 202010737195
(43) Date of publication of application: 27.07.2022
(73) Proprietor: CRRC Qingdao Sifang Co., Ltd., Qingdao, Shandong 266111 (CN)
(72) Inventor: MA, Lijun, Qingdao, Shandong 266111 (CN); TAO, Guidong, Qingdao, Shandong 266111 (CN); ZHOU, Pingyu, Qingdao, Shandong 266111 (CN); WANG, Xu, Qingdao, Shandong 266111 (CN); QIAO, Qingfeng, Qingdao, Shandong 266111 (CN); ZHANG, Zhenxian, Qingdao, Shandong 266111 (CN); FENG, Yonghua, Qingdao, Shandong 266111 (CN)
(74) Representative: Micheli & Cie SA
(86) International application number: PCT/CN2021/083985
(87) International publication number: WO 2022/021916

(56) References cited:
- EP-A2- 1 138 569
- CN-A- 109 532 920
- CN-A- 111 137 319
- CN-A- 111 806 502
- DE-C- 235 085
- FR-A- 1 512 523
- JP-A- H08 169 338
- JP-A- H08 282 489

## Description

### CROSS-REFERENCE TO RELATED APPLICATION

The present application claims priority to Chinese application No. 202010737195.3 filed on July 28, 2020, entitled "Wheel Mounting Bushing for Variable-Gauge Wheelset, and Variable-Gauge Wheelset".

### FIELD OF TECHNOLOGY

The present application relates to the technical field of railway vehicle gauge changing, and in particular, to a wheel mounting axle sleeve for a gauge-changing wheelset and a gauge-changing wheelset.

### BACKGROUND

Transnational passenger and cargo transportation has grown rapidly in recent years. However, different rail gauges of various countries have seriously hindered the transnational rail transportation. In order to solve the problem that the different rail gauges of various countries seriously hinder the transnational railway transportation, a gauge-changing train is proposed, when the train runs on the railway of another country, a distance between wheels on an axle is changeable so as to adapt to the gauge of other countries' railways.

However, traditional wheel and axle have complex connection structure, and the gauge-changing operation has low reliability.

CN109532920A provides a gauge-changing wheelset and a gauge-changing bogie, which includes an axle, wheels separately arranged at both ends of the axle, a transmission mechanism respectively arranged on the inner side of the wheel and matched with the corresponding wheels, and a drive device. The transmission mechanism includes an inner sleeve, an intermediate transition sleeve and an outer sleeve set from the inside to the outside. The connecting end of the inner sleeve is connected with the inner side of the wheel. The outer circumference of the inner sleeve is provided with an outer spline. The inner circumference of the intermediate transition sleeve is provided with an inner spline. The inner sleeve and the intermediate transition sleeve are connected with the outer spline through the inner spline. The driving device includes a driving gear and a driven gear. The driven gear is fixed on the outer circumference of the outer sleeve. The driving gear meshes with the driven gear, and the driving gear drives the driven gear to drive the wheel to rotate. There is a locking sleeve between the wheel and the axle. The locking sleeve is provided with a locking table. The axle box body is equipped with a plurality of locking grooves arranged at intervals for locking the locking table along its axis.

### SUMMARY

The present application is intended to address at least one of technical problems in the prior art. The present application provides a wheel mounting axle sleeve for a gauge-changing wheelset, which facilitates the wheels to slide along the axle to change a gauge, which provides simple connection structure between the axle and the wheels, and highly reliable gauge-changing operation.

The present application further provides a gauge-changing wheelset.

According to an embodiment of an aspect of the present application, a wheel mounting axle sleeve for a gauge-changing wheelset is provided, wherein an outer circumference of a first end of the axle sleeve is provided with a wheel mounting base, an outer circumference of a second end of the axle sleeve is provided with a section of an outer spline extending along an axial direction of the axle sleeve, and an inner circumference of the second end of the axle sleeve is provided with a section of a first non-self-locking thread.

According to an embodiment of the present application, a sliding bearing mounting groove extending from the first end to the second end of the axle sleeve is provided on the inner circumference of the axle sleeve. The sliding bearing mounting groove extends to a position close to the first non-self-locking thread and is configured to mount a sliding bearing.

According to an embodiment of the present application, the inner circumference of the axle sleeve is provided with a sealing ring mounting groove at a position between the sliding bearing mounting groove and the first non-self-locking thread.

According to an embodiment of the present application, the first non-self-locking thread is a trapezoidal thread.

According to an embodiment of the present application, the first end of the axle sleeve is provided with a sliding bearing gland mounting groove and a plurality of threaded holes are disposed at a bottom surface of the sliding bearing gland mounting groove at intervals in a circumferential direction of the bottom surface.

According to an embodiment of the present application, the wheel mounting base has a width consistent with a width of a hub of a wheel.

According to an embodiment of the present application, the axle sleeve has an outer surface in a three-stage stepped shape with a descending diameter from the first end to the second end of the axle sleeve.

According to an embodiment of another aspect of the present application, a gauge-changing wheelset is provided including an axle, a pair of wheels and a pair of wheel mounting axle sleeves mentioned above. First non-self-locking threads of the pair of wheel mounting axle sleeves have opposite directions of rotation, and the pair of wheels are fastened on the wheel mounting bases of the pair of axle sleeves. The axle is provided with two sections of second non-self-locking threads each forming a non-self-locking thread pair with the first non-self-locking thread at intervals; the wheels are mounted on the axle through the axle sleeves, and the first non-self-locking thread is fitted and matched with the second non-self-locking thread.

According to an embodiment of the present application, the axle is further provided with a central through hole provided along an axial direction of the axle, an outer circumference of the axle close to a middle portion thereof is provided with a section of outer spline extending in the axial direction of the axle, and the outer spline of the axle is provided with an oblong hole radially extending through the outer spline and having a longitudinal direction along the axial direction of the axle.

At least one first raceway circumferentially disposed around the axle is provided at a position between one of second non-self-locking threads and the outer spline of the axle; and
the gauge-changing wheelset further includes an outer sleeve, where the outer sleeve is sleeved outside the axle, an inner circumference of the outer sleeve is provided with a second raceway corresponding to the first raceway, the second raceway is provided with a rolling element mounting hole and in snap fit with the first raceway to form a rolling space in which a rolling element matched therewith is mounted through the rolling element mounting hole, such that the outer sleeve is rotatably connected outside the axle, and an inner spline matched with the outer spline on the axle sleeve is provided on both axial sides of the second raceway inside the outer sleeve and located at a predetermined distance from the second raceway.

According to an embodiment of the present application, the gauge-changing wheelset further includes a locking slip ring, a thrust pin, an elastic piece and a thrust rod;
the locking slip ring is slidably sleeved at the outer spline of the axle, and the locking slip ring is provided therein with an inner spline matched with the outer spline of the axle, and provided externally with an outer spline matched with the inner spline of the outer sleeve; an inner wall of the locking slip ring is radially provided with a pair of open slots having openings communicated with an end of the locking slip ring; the thrust pin passes through the oblong hole, and both ends of the thrust pin protrude from the oblong hole and both ends of the thrust pin protruding from the oblong hole are embedded inside the pair of the open slots by the openings of the open slots; the locking elastic piece is sleeved on the axle, having an end abutted against an outer wall of the first raceway, and the other end abutted against an end of the locking slip ring away from the open slot; and when the locking elastic piece is in a natural state, the outer spline outside the locking slip ring is at least partially located in the inner spline of a corresponding side of the outer sleeve to lock the rotation of the outer sleeve; and
the thrust rod has an end penetrating through the central through hole of the axle and abutted against a side of the thrust pin on which the open slot is located and the other end extending to an end portion of the axle.

According to an embodiment of the present application, the gauge-changing wheelset further includes an unlocking mechanism mounted on an end of the axle where the thrust rod is located; and
an axle-box body is mounted at each end of the axle located outside the pair of wheels, and the unlocking mechanism includes a mounting base and a pushing head penetrating axially through the mounting base. The mounting base is fixedly mounted outside the axle-box body and the pushing head is disposed opposite to the thrust rod.

According to an embodiment of the present application, the first non-self-locking thread has a length greater than the length of the second non-self-locking thread and equal to half of the gauge to be changed;
an inner circumference of the outer sleeve is provided with an annular boss at the second raceway, and after the outer sleeve is connected to the axle, a pair of mounting spaces for the axle sleeves are formed between the outer sleeve and the axle at both axial sides of the rolling space; and
the elastic piece is a locking spring.

One or more technical solutions in the embodiments of the present application mentioned above have at least one of the following technical effects.

According to an embodiment of the present application, for the wheel mounting axle sleeve for a gauge-changing wheelset, wherein an outer circumference of a first end of the axle sleeve is provided with a wheel mounting base, an outer circumference of a second end of the axle sleeve is provided with a section of an outer spline extending along an axial direction of the axle sleeve, and an inner circumference of the second end of the axle sleeve is provided with a section of a first non-self-locking thread. The structural design of the axle sleeve facilitates the wheels to easily slide along the axle 10 to change the gauge, and the connection structure of the axle 10 and the wheel 30 is simple, and the gauge-changing reliability is high.

For the gauge-changing wheelset according to the embodiments of the present application, by providing the wheel mounting axle sleeve for the gauge-changing wheelset mentioned above, no complex gauge-changing mechanisms need to be disposed, which simplifies the structure of other matching components outside the axle, so that the gauge-changing wheelset can have simple overall structure, convenient installation, and reliable gauge-changing operation.

The additional aspects and advantages of the present application will be partially given in the following description, and some thereof will be obvious from the following description, or be understood through the practice of the present application.

### BRIEF DESCRIPTION OF THE DRAWINGS

In order to more clearly illustrate technical solutions disclosed in the embodiments of the present application or the prior art, the drawings used in the descriptions of the embodiments or the prior art will be briefly described below. Obviously, the drawings in the following description are only certain embodiments of the present application, and other drawings can be obtained according to the drawings without any creative work for those skilled in the art.
FIG. 1 is a front schematic structural diagram showing a wheel mounting axle sleeve for a gauge-changing wheelset according to an embodiment of the present application;
FIG. 2 is an axial sectional schematic diagram of FIG. 1;
FIG. 3 is a perspective schematic structural diagram showing a wheel mounting axle sleeve for a gauge-changing wheelset according to an embodiment of the present application;
FIG. 4 is a front schematic structural diagram showing an axle of a gauge-changing wheelset according to an embodiment of the present application;
FIG. 5 is an axial sectional schematic structural diagram of a gauge-changing wheelset according to an embodiment of the present application; and
FIG. 6 is an axial sectional schematic structural diagram of another gauge-changing wheelset according to an embodiment of the present application;

Reference numerals:
10. axle; 11. outer spline of the axle; 12. oblong hole; 13. first raceway; 14. second non-self-locking thread; 15. central through hole; 20. axle sleeve; 21. first non-self-locking thread; 22. outer spline of axle sleeve; 23. sliding bearing mounting groove; 24. wheel mounting base; 25. sliding bearing gland mounting groove; 30. wheel; 40. outer sleeve; 41. second raceway; 50. axle-box body; 60. locking slip ring; 70. locking spring; 80. thrust pin; 90. thrust rod; 100. unlocking mechanism; 110. sliding bearing; 120. gearbox; 130. brake disc.

### DETAILED DESCRIPTION

Embodiments of the present application are further described in detail below with reference to the drawings and embodiments. The following embodiments are intended to illustrate the present application, but are not intended to limit the scope of the present application.

In the description of the embodiments of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present application and simplifying the description, rather than indicating or implying that the device or component stated must have a particular orientation, is constructed and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the embodiments of the present application, it is to be noted that unless explicitly stated and defined otherwise, the terms "connected with", and "connected" shall be understood broadly, for example, it may be either fixedly connected or detachably connected, or can be integrated; it may be mechanically connected, or electrically connected; it may be directly connected, or indirectly connected through an intermediate medium. The specific meanings of the terms above in embodiments of the present application can be understood by a person skilled in the art in accordance with specific conditions.

In the embodiments of this application, unless otherwise clearly stated and defined, the first feature being located "on" or "under" the second feature means that the first feature is in direct contact with the second feature or the first feature is in contact with the second feature by an intervening media. Also, the first feature being located "on", "above" and "on top of' the second feature may mean that the first feature is directly on or above the second feature, or it simply means that the level of the first feature is higher than the second feature. The first feature being located "under", "below" and "on bottom of' the second feature may mean that the first feature is directly under or below the second feature, or it simply means that the level of the first feature is lower than the second feature.

In the description of this specification, descriptions with reference to the terms "one embodiment", "some embodiments", "examples", "specific examples", or "some examples" etc. mean that specific features, structure, materials or characteristics described in conjunction with the embodiment or example are included in at least one embodiment or example of the embodiments of the present application. In this specification, the schematic expressions of the above terms do not necessarily refer to the same embodiment or example. Also, the described specific features, structures, materials or characteristics can be combined in any one or more embodiments or examples in a suitable manner. In addition, those skilled in the art may integrate and combine the different embodiments or examples and the features of the different embodiments or examples described in this specification without contradicting each other.

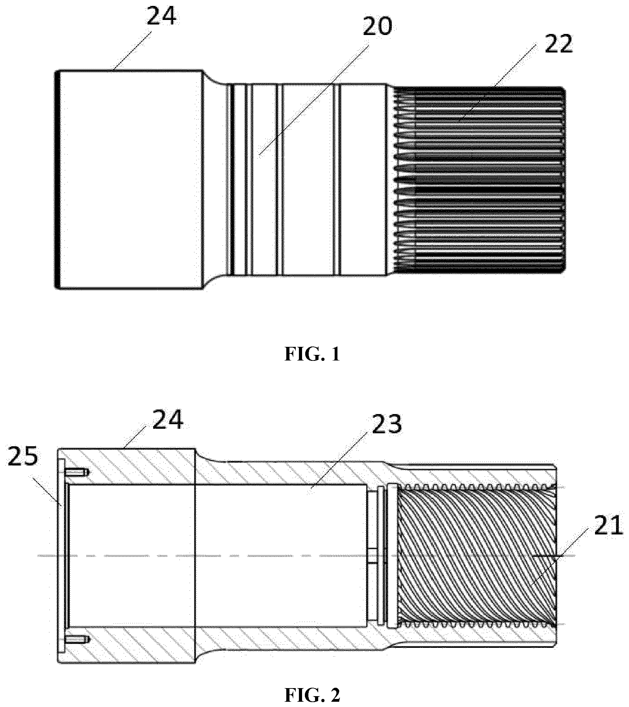

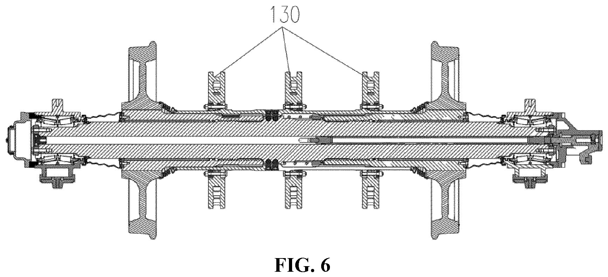

As shown in FIGS. 1 to 6, embodiments of the present application provide a wheel mounting axle sleeve for a gauge-changing wheelset and a gauge-changing wheelset.

In order to introduce the technical solutions of the present application clearly, the wheel mounting axle sleeve for a gauge-changing wheelset is described by combining the gauge-changing wheelset.

The gauge-changing wheelset includes a pair of wheel mounting axle sleeves 20 for a gauge-changing wheelset, an outer sleeve 40, an axle 10 and a pair of wheels 30.

An outer circumference of a first end of each axle sleeve 20 is provided with a wheel mounting base 24 having a width consistent with the width of the hub of each wheel 30, the wheel 30 is fastened on the wheel mounting base 24, and may be in interference fit with the wheel mounting base 24 so as to ensure the reliability of the connection between the two.

An inner periphery of the second end of each axle sleeve 20 is provided with a section of a first non-self-locking thread 21. The first non-self-locking threads 21 of the pair of axle sleeves 20 have opposite directions of rotation, and the pair of wheels 30 are fastened on the wheel mounting bases 24 of the pair of axle sleeves 20. The axle 10 is provided with two sections of second non-self-locking threads 14 that form a non-self-locking thread pair with the first non-self-locking thread 21 at intervals; the wheels 30 are mounted on the axle 10 through the axle sleeves 20, and the first non-self-locking threads 21 is matched with the second non-self-locking threads 14. When the pair of wheels 30 is pushed inward or outward at the same time after the wheels 30 are unloaded, due to the non-self-locking thread pair having opposite directions of rotation, the pair of wheels 30 may move closer to each other or away from each other when they rotate in the same direction until they move to a set gauge-changing position so as to change the gauge. By arranging the wheel mounting axle sleeve for a gauge change wheelset, the wheels 30 can easily slide along the axle 10 to change the gauge, the connection structure of the axle 10 and the wheel 30 is simple, and the gauge-changing reliability is high. The axle sleeve 20 engages with the second non-self-locking thread 14 of the axle 10 by the first non-self-locking thread 21 for transmitting part of the torque, and generating relative rotation and lateral movement between the axle sleeve 20 and the axle 10 in the unlocked state.

Specifically, the first non-self-locking thread 21 has a length greater than the length of the second non-self-locking thread 14, and the length difference is equal to half of the gauge to be changed, so that both wheels 30 can move half of the gauge to be changed relative to the axle 10 during the rotation by following respective axle sleeves 20, so that a sum of the distances both wheels 30 move is equal to the distance of the desired gauge to be changed.

According to an embodiment of the present application, as shown in FIG. 1 to FIG. 3, a sliding bearing mounting groove 23 extending from a first end to a second end of the axle sleeve 20 is provided at an inner circumference of the axle sleeve 20 and is used for mounting a sliding bearing 110. The sliding bearing mounting groove 23 extends to a position close to the first non-self-locking thread 21, and has a length consistent with a length of the sliding bearing 110. By arranging the sliding bearing 110, it is convenient for the axle sleeve 20 to slide stably and smoothly and a protective effect on the axle sleeve 20 is provided.

According to an embodiment of the present application, the inner circumference of the axle sleeve 20 is provided with a sealing ring mounting groove at the position between the sliding bearing mounting groove 23 and the first non-self-locking thread 21, and the sealing ring mounting groove is used for mounting the sealing ring so as to seal the end of the sliding bearing 110.

According to an embodiment of the present application, the first end of the axle sleeve 20 is provided with a sliding bearing gland mounting groove 25 used to mount the sliding bearing gland. A plurality of threaded holes are disposed at a circumferential bottom surface of the sliding bearing gland mounting groove 25 at intervals so that the sliding bearing gland is fixed in the sliding bearing gland mounting groove 25 by a fastener and the sliding bearing 110 is fixed by the sliding bearing gland. In addition, an inner circumference of the sliding bearing gland is provided with a sealing ring mounting groove for mounting the sealing ring, thereby forming a sealing structure at both ends of the sliding bearing 110 to prevent grease from entering the joint surface of the sliding bearing 110 and the axle 10.

In order to optimize the structure, according to an embodiment of the present application, the axle sleeve 20 has an outer surface in a three-stage stepped shape with a descending diameter from the first end to the second end of the axle sleeve 20, a part of the axle sleeve 20 at the wheel mounting base 24 has the largest diameter and the highest strength, and adjacent steps are connected by arc surface transition so as to avoid stress concentration at the connection between steps.

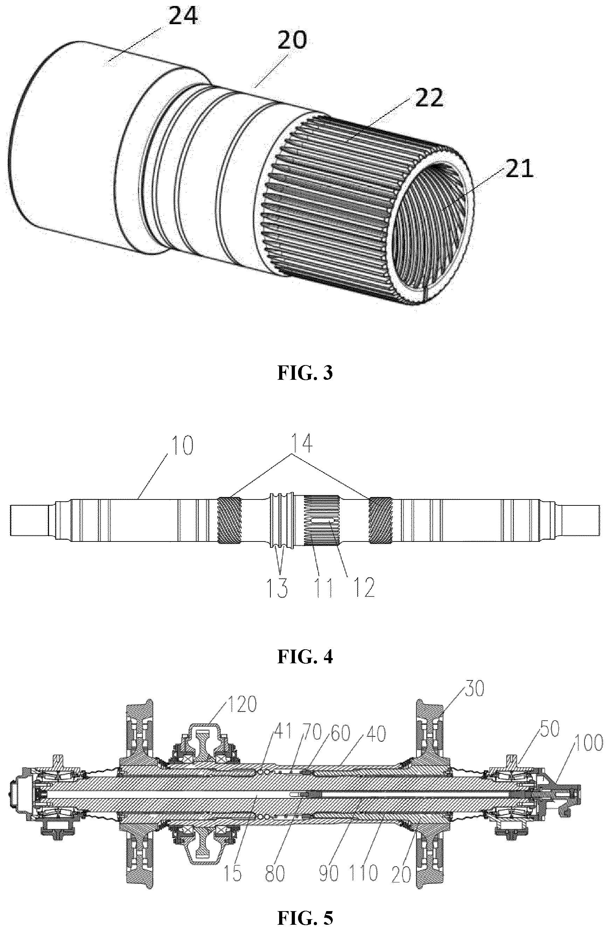

Specifically, as shown in FIGS. 4 to 6, the axle 10 is further provided with a central through hole 15 extending along the axial direction of the axle, an outer circumference of the axle 10 close to the middle portion thereof is provided with a section of outer spline extending in the axial direction of the axle 10, and both axial sides of the outer spline 11 of the axle at the outer circumference thereof are provided with a pair of second non-self-locking threads 14 having opposite directions of rotation, that is, the axle 10 is further provided with two sections of second non-self-locking thread 14 having opposite directions of rotation disposed at both axial sides of the outer spline 11. In an embodiment, there is a spacing between each section of second non-self-locking thread 14 and the outer spline 11 of the axle. The outer spline 11 of the axle 10 is provided with an oblong hole 12 radially extending through the outer spline. That is, the oblong hole 12 and the outer spline are overlapped, and has a longitudinal direction coinciding with the axial direction of the axle, that is, the oblong hole 12 has a longitudinal direction consistent with the extending direction of the outer spline 11 of the axle.

In addition, the central through hole 15 provided on the axle 10 is beneficial to reduce the weight of the axle 10.

Further, a part of the axle 20 between a second non-self-locking thread 14 and the outer spline 11 of the axle is provided with at least one first raceway 13 circumferentially disposed around the axle 10, and the first raceway 13 is disposed close to the outer spline 11 of the axle.

In the present embodiment, the first raceway 13 has a cross section of concave semicircle.

The outer sleeve 40 is sleeved outside the axle 10, an inner circumference of the outer sleeve 40 is provided with a second raceway 41 corresponding to the first raceway 13 and having the same size and shape as those of the first raceway 13. The second raceway 41 is provided with a rolling element mounting hole and is in snap fit with the first raceway 13 to form a circular rolling space in which a rolling element is mounted through the rolling element mounting hole. The rolling element, which may be a rolling ball, has an outer diameter matched with an inner diameter of the rolling space. The rolling space is filled with the rolling elements. In order to prevent impurities such as dust from entering the rolling space, a sealing plug is provided at the rolling element mounting hole. By connecting the outer sleeve 40 with the axle 10 through the rolling element, the outer sleeve 40 is rotatably connected outside the axle 10, in other words, the outer sleeve 40 has rotational degree of freedom, but is restricted the movement degree of freedom, that is, the outer sleeve 40 can rotate relative to the axle 10 but cannot move.

The outer circumference of the second end of the axle sleeve 20 is provided with a section of outer splines extending along its axial direction. After being mounted, the second end of the axle sleeve 20 is located inside the wheel 30 and faces the outer sleeve 40; inner splines matched with the outer splines on the axle sleeve 20 are respectively disposed on an inner circumference of the outer sleeve at positions on both axial sides of the second raceway 42 and at a predetermined interval from the second raceway 41. The axle sleeve 20 and the outer sleeve 40 are connected through the inner splines of the outer sleeve 40 and the outer splines 22 of the axle sleeve 20 such that the axle sleeve 20 can rotate together with the outer sleeve 40, or the axle sleeve 20 can move axially relative to the outer sleeve 40. In the present embodiment, by arranging the axle sleeve 20, the torque transmission between the wheel 30 and the outer sleeve 40 and the lateral slip between the wheel 30 and the axle 10 are realized. The axle sleeve 20 has a simple and reliable structure, and can realize the conversion among various different gauges.

According to an embodiment of the present application, an annular flange is formed at a position of the axle 10 where the first raceway 13 is constructed, and the annular flange has an outer diameter larger than the outer diameter of the remaining part of the axle 10 such that stop end surfaces are formed at both axial ends of the annular flange.

Specifically, both ends of the axle 10 located outside the pair of wheels 30 are respectively mounted with axle-box bodies 50.

According to an embodiment of the present application, the gauge-changing wheelset further includes a locking slip ring 60, a thrust pin 80, an elastic piece and a thrust rod 90. In an embodiment, the locking slip ring 60 is slidably sleeved at the outer spline 11 of the axle, and the locking slip ring is provided therein with an inner spline matched with the outer spline 11 of the axle, and provided externally with an outer spline matched with the inner spline of the outer sleeve 40. An inner wall of the locking slip ring 60 is radially provided with a pair of open slots having openings communicated with an end of the locking slip ring 60. The thrust pin 80 passes through the oblong hole 12, and both ends of the thrust pin 80 protrude from the oblong hole 12 and both ends of the thrust pin 80 protruding from the oblong hole 12 are embedded inside the pair of the open slots by the openings of the open slots. The thrust pin 80 has a length same as a distance between the top walls of a pair of open slots, and both ends of the thrust pin 80 abut against the top walls of the open slot. In addition, the thrust pin 80 has a width consistent with widths of the open slots such that the thrust pin 80 and the locking slip ring 60 have reliable connection.

In order to facilitate the axial movement of the thrust pin 80 along the oblong hole 12, the thrust pin 80 has a width smaller than the length of the oblong hole 12, and a thickness less than or equal to the width of the oblong hole 12. In addition, the width of the locking slip ring 60 should not be too wide to ensure that the locking slip ring 60 can have an amount of movement in the space between the second raceway 41 of the outer sleeve 40 and the inner spline of the outer sleeve 40. In addition, the oblong hole 12 should have a length slightly smaller than the length of the outer splines 11 of the axle, so that the locking slip ring 60 always moves on the outer splines 11 of the axle.

The elastic piece, for example, an elastic spring 70, is sleeved on the axle, and has an end abutted against an outer wall, i.e., a stop end surface of the first raceway 13, and the other end abutted against an end of the locking slip ring 60 away from the open slot. When the elastic piece is in a natural state, the outer spline outside the locking slip ring 60 are at least partially located in the inner spline of a corresponding side of the outer sleeve 40 to lock the rotation of the outer sleeve 40 for fixing the outer sleeve relative to the axle 10. In this case, the wheels and the axle sleeve 20 as well as the outer sleeve 40 and the axle 10 are integrated and have no relative rotation relative to each other, and the wheels 30 are in a locked state.

The thrust rod 90 has an end penetrating the central through hole 15 of the axle 10 and abutted against a side of the thrust pin 80 where an open slot is located. For example, the thrust pin 80 may be provided with a connecting shaft extending to a side, and the thrust rod 90 is designed to be hollow and sleeved on the connecting shaft of the thrust pin 80 to fix the two. The connecting shaft can also be provided with an external thread, and an inner hole at an end of the thrust rod 90 is provided with an internal thread for forming a threaded connection with the external thread. The thrust rod 90 has the other end extending to the end of the central through hole 15. Preferably, the outer end of the thrust rod 90 is substantially flush with the end of the central through hole 15. The axle box body 50 may be lifted by an unlocking rail and thus the wheels 30 are unloaded, a trust is applied to the thrust pin 80 by the thrust rod 90 to drive the locking slip ring 60 to compress the elastic piece on the axle 10 to move away from the inner spline of the outer sleeve 40 to disengage from the inner spline of the outer sleeve 40 key and thus the rotational degree of freedom of the outer sleeve 40 is unlocked. In this case, when the wheels 30 are pushed, since the axle sleeve 20 is connected with the axle 10 through the non-self-locking thread pair, the outer sleeve 40, the wheel 30 and the axle sleeve 20 will rotate together around the axle 10, the first non-self-locking thread 21 of the axle sleeve 20 moves along the second non-self-locking thread 14 of the axle 10 during the rotation, so that the wheel 30 moves along with the axle sleeve 20 during the rotation until the gauge is changed.

After the gauge is changed, the thrust of the thrust rod 90 on the thrust pin 80 is removed, and the thrust pin 80 will follow the slip ring 60 to return to its original position under the elastic reset action of the locking elastic piece, that is, the outer splines of the slip ring 60 are re-inserted into the outer splines of the outer sleeve 40 to lock the rotational degree of freedom of the outer sleeve 40. In this case, the axle sleeve 20 and the outer sleeve 40 cannot rotate relative to the axle 10, the axle sleeve 20 and the outer sleeve 40 can only rotate together with the axle 10, that is, the axle sleeve 20 and the outer sleeve 40 are locked on the axle 10, and the wheel 30 is re-locked.

The gauge-changing wheelset according to the embodiment has convenient and reliable gauge-changing operation, and simple overall structure.

In an embodiment, the first non-self-locking thread 21 is a trapezoidal thread, and correspondingly, the second non-self-locking thread 14 is a trapezoidal thread matching the trapezoidal thread of the first non-self-locking thread 21, resulting in reliable performance.

It should be noted that the elastic piece may also be other elastic sleeves with certain elasticity.

In order to directly apply a thrust to the thrust rod 90 by means of an external force when changing gauge, according to an embodiment of the present application, an unlocking mechanism 100 is further included, and the unlocking mechanism 100 is installed at an end of the axle 10 where the thrust rod 90 is located, that is, the unlocking mechanism 100 only needs to be mounted on an end of the axle 10.

Specifically, the unlocking mechanism 100 includes a mounting base and a pushing head penetrating axially through the mounting base, the mounting base is fixedly mounted outside the axle box body 50, the pushing head and the thrust rod 90 are disposed opposite to each other, or may be arranged coaxially, and a gap can be reserved between the pushing head and the thrust rod 90. When an axial thrust is applied from the side wall of the ground gauge-changing facility to the pushing head, the pushing head pushes the thrust rod 90 for unlocking, that is, pushes the thrust pin 80 to drive the locking slip ring 60 to move such that outer splines outside the locking slip ring 60 are disengaged from the inner splines of the outer sleeve 40, and the unlocking is completed.

After the gauge is changed, the thrust pin 80 recovers and pushes out the thrust rod 90 under the action of the restoring force of the locking spring 70, and pushes out of the pushing head by the thrust rod 90, then the gauge-changing process ends, the wheelset is completely locked, and the normal operation state is re-entered.

According to an embodiment of the present application, an inner circumference of the outer sleeve 40 is provided with an annular boss at the second raceway 41 and the second raceway 41 is formed on the annular boss. After the outer sleeve 40 and the axle 10 are connected by a rolling ball, a pair of mounting spaces for the axle sleeves 20 are formed between the outer sleeve 40 and the axle 10 at both axial sides of the rolling space. During the sliding process, the sliding bearing 110 is in sliding contact with the axle 10 and is inserted into the outer sleeve 40 from the mounting space; the outer spline 22 of the axle sleeve move axially relative to the inner spline of the outer sleeve 40 until the first non-self-locking thread 21 of the axle 20 is in contact with the second non-self-locking thread 14 of the axle 10, the axle 20 is rotated such that the first non-self-locking thread 21 is screwed into the second non-self-locking thread 14.

For a gauge-changing wheelset for motor vehicle, a gearbox 120 is mounted outside the outer sleeve 40, and for a gauge-changing wheelset for trailer, a plurality of brake discs 130 are mounted outside the outer sleeve 40.

In order to improve the reliability of the connection between the outer sleeve 40 and the axle 10, according to an embodiment of the present application, there are two first raceways 13 arranged side by side. Correspondingly, there are two second raceways 41, thus forming two raceway spaces arranged side by side.

Further, the axle 10 is divided into a main half shaft and an auxiliary half shaft by each first raceway 13, and the part of the axle 10 provided with the outer splines and the oblong hole 12 is the main half shaft. The locking slip ring 60 is mounted on the main half shaft, and the open slot of the locking slip ring 60 faces towards the free end of the main half shaft, and the locking spring 70 is mounted between the stop end surface of the annular flange and the locking slip ring 60.

For optimizing the structure, the first raceway 13 is disposed close to the outer spline 11 of the axle 10.

According to an embodiment of the present application, a distance between the outer splines 11 of the axle and the adjacent second non-self-locking threads 14 is equal to a distance between the annular flange and the adjacent second non-self-locking threads 14, and both of the distances are equal to half of the changing gauge and the distance is a movement space of the first non-self-locking thread 21 of the axle sleeve 20.

According to an embodiment of the present application, the axle 10 is configured at each end as a stepped shaft with a diameter smaller than the middle diameter, so that an end of the stepped shaft is used to mount the axle-box body 50.

According to an embodiment of the present application, sliding sections are respectively formed on the intermediate shaft of the stepped shaft between each section of the second non-self-locking thread 14 and the shaft end of the intermediate shaft, so that the sliding bearings 110 of the axle sleeve 20 slides relative to the axle 10.

According to an embodiment, the gauge-changing process is shown as follows.
1. unlocking stage: the axle-box body 50 is gradually lifted by an unlocking rail, so that the wheel 30 is unloaded; after the unlocking mechanism 100 is triggered, the pushing head is pushed inward to contact the thrust rod 90, and the thrust pin 80 and the locking slip ring 60 are pushed to move inward and compresses the locking spring 70 until the locking slip ring 60 is out of contact with the inner splines of the outer sleeve 40, and the rotational constraint between the axle 10 and the axle sleeve 20 is released.
2. gauge-changing stage: after entering the gauge-changing stage, the wheels 30 move inward (or outward) under the action of the gauge-changing lateral force, and the wheels 30 and the axle sleeve 20 rotate together around the non-self-locking thread pair to reach a target gauge.
3. locking stage: after entering the locking stage, the unlocking rail gradually lowers and no longer plays supporting role, and the locking slip ring 60 moves outward under the thrust of the locking spring 70 and is inserted into the inner spline of the outer sleeve 40 to be re-locked; the thrust pin 80 recovers and pushes out the thrust rod 90 under the action of the restoring force of the locking spring 70, and pushes out of the pushing head by the thrust rod 90, then the gauge-changing process ends, the wheelset is completely locked, and the normal operation state is re-entered.

## Claims

1. A wheel mounting axle sleeve (20) for a gauge-changing wheelset, wherein an outer circumference of a first end of the axle sleeve (20) is provided with a wheel mounting base (24), and an outer circumference of a second end of the axle sleeve (20) is provided with a section of an outer spline extending along an axial direction of the axle sleeve (20), **characterized in that** an inner circumference of the second end of the axle sleeve (20) is provided with a section of a first non-self-locking thread (21).

2. The wheel mounting axle sleeve (20) of claim 1, wherein a sliding bearing mounting groove (23) extending from the first end to the second end of the axle sleeve (20) is provided on an inner circumference of the axle sleeve (20); and
the sliding bearing mounting groove (23) extends to a position close to the first non-self-locking thread (21) and is configured to mount a sliding bearing (110).

3. The wheel mounting axle sleeve (20) of claim 2, wherein the inner circumference of the axle sleeve (20) is provided with a sealing ring mounting groove at a position between the sliding bearing mounting groove (23) and the first non-self-locking thread (21).

4. The wheel mounting axle sleeve (20) of any one of claims 1 to 3, wherein the first non-self-locking thread (21) is a trapezoidal thread.

5. The wheel mounting axle sleeve (20) of claim 1, wherein the first end of the axle sleeve (20) is provided with a sliding bearing gland mounting groove (25), and a plurality of threaded holes are disposed at a bottom surface of the sliding bearing gland mounting groove (25) at intervals.

6. The wheel mounting axle sleeve (20) of claim 1, wherein the wheel mounting base (24) has a width consistent with a width of a hub of a wheel (30).

7. The wheel mounting axle sleeve (20) of claim 1, wherein the axle sleeve (20) has an outer surface in a three-stage stepped shape with a descending diameter from the first end to the second end of the axle sleeve (20).

8. A gauge-changing wheelset, comprising an axle (10), a pair of wheels (30), and a pair of wheel mounting axle sleeves (20) of any one of claims 1 to 7, wherein the first non-self-locking threads (21) of the pair of wheel mounting axle sleeves (20) have opposite directions of rotation, and the pair of wheels (30) are fastened on the wheel mounting bases (24) of the pair of axle sleeves (20); the axle (10) is provided with two sections of second non-self-locking threads (14) each forming a non-self-locking thread pair with the first non-self-locking thread (21) at intervals; and the wheels (30) are mounted on the axle (10) through the axle sleeves (20), and the first non-self-locking thread (21) is fitted and matched with the second non-self-locking thread (14).

9. The gauge-changing wheelset of claim 8, wherein the axle (10) is further provided with a central through hole (15) provided along an axial direction of the axle (10), an outer circumference of the axle (10) close to a middle portion thereof is provided with a section of outer spline extending in the axial direction of the axle (10), and the outer spline of the axle (11) is provided with an oblong hole (12) radially extending through the outer spline and having a longitudinal direction along the axial direction of the axle (10);
at least one first raceway (13) circumferentially disposed around the axle (10) is provided at a position between one of second non-self-locking threads (14) and the outer spline of the axle (11); and
the gauge-changing wheelset further comprises an outer sleeve (40), the outer sleeve (40) is sleeved outside the axle (10), an inner circumference of the outer sleeve (40) is provided with a second raceway (41) corresponding to the first raceway (13), the second raceway (41) is provided with a rolling element mounting hole and in snap-fit with the first raceway (13) to form a rolling space in which a rolling element matched therewith is mounted through the rolling element mounting hole, such that the outer sleeve (40) is rotatably connected outside the axle (10), and an inner spline matched with the outer spline on the axle sleeve (20) is provided on both axial sides of the second raceway (41) inside the outer sleeve (40) and located at a predetermined distance from the second raceway (41).

10. The gauge-changing wheelset of claim 9, further comprising a locking slip ring (60), a thrust pin (80), an elastic piece and a thrust rod (90);
the locking slip ring (60) is slidably sleeved at the outer spline of the axle (11), and the locking slip ring (60) is provided therein with an inner spline matched with the outer spline of the axle (11), and provided externally with an outer spline matched with the inner spline of the outer sleeve (40); an inner wall of the locking slip ring (60) is radially provided with a pair of open slots having openings communicated with an end of the locking slip ring (60); the thrust pin (80) passes through the oblong hole (12), and both ends of the thrust pin (80) protrude from the oblong hole (12) and both ends of the thrust pin (80) protruding from the oblong hole (12) are embedded inside the pair of the open slots by the openings of the open slots; the elastic piece is sleeved on the axle (10), having an end abutted against an outer wall of the first raceway (13), and the other end abutted against an end of the locking slip ring (60) away from the open slot; and when the elastic piece is in a natural state, the outer spline outside the locking slip ring (60) is at least partially located in the inner spline of a corresponding side of the outer sleeve (40) to lock the rotation of the outer sleeve (40); and
the thrust rod (90) has an end penetrating through the central through hole (15) of the axle (10) and abutted against a side of the thrust pin (80) at which the open slot is located and the other end extending to an end portion of the central through hole (15).

11. The gauge-changing wheelset of claim 10, wherein the gauge-changing wheelset further comprises an unlocking mechanism (100) mounted at an end of the axle (10) where the thrust rod (90) is located; and
an axle-box body (50) is mounted at each end of the axle (10) located outside the pair of wheels (30) and the unlocking mechanism (100) comprises a mounting base and a pushing head penetrating axially through the mounting base; the mounting base is fixedly mounted outside the axle-box body (50) and the pushing head is disposed opposite to the thrust rod (90).

12. The gauge-changing wheelset of claim 10, wherein
the first non-self-locking thread (21) has a length greater than the length of the second non-self-locking thread (14) and equal to half of the gauge to be changed;
an inner circumference of the outer sleeve (40) is provided with an annular boss at the second raceway (41), and after the outer sleeve (40) is connected to the axle (10), a pair of mounting spaces for the axle sleeves (20) are formed between the outer sleeve (40) and the axle (10) at both axial sides of the rolling space; and
the elastic piece is a locking spring (70).

## Patentansprüche

1. Radbefestigungsachshülse (20) für einen Radsatz mit veränderlicher Spurweite, wobei ein äußerer Umfang eines ersten Endes der Achshülse (20) mit einer Radbefestigungsbasis (24) versehen ist, und ein äußerer Umfang eines zweiten Endes der Achshülse (20) mit einem Abschnitt einer äußerer Keilwelle versehen ist, der sich entlang einer axialen Richtung der Achshülse (20) erstreckt,
**dadurch gekennzeichnet, dass** ein innerer Umfang des zweiten Endes der Achshülse (20) mit einem Abschnitt eines ersten nicht selbsthemmenden Gewindes (21) versehen ist.

2. Radbefestigungsachshülse (20) nach Anspruch 1, wobei eine Gleitlagerbefestigungsnut (23), die sich von dem ersten Ende zu dem zweiten Ende der Achshülse (20) erstreckt, auf einem inneren Umfang der Achshülse (20) bereitgestellt wird; und
sich die Gleitlagerbefestigungsnut (23) bis zu einer Position nahe an dem ersten nicht selbsthemmenden Gewinde (21) erstreckt und dazu konfiguriert ist, ein Gleitlager (110) zu befestigen.

3. Radbefestigungsachshülse (20) nach Anspruch 2, wobei der innere Umfang der Achshülse (20) mit einer Dichtringbefestigungsnut in einer Position zwischen der Gleitlagerbefestigungsnut (23) und dem ersten nicht selbsthemmenden Gewinde (21) versehen ist.

4. Radbefestigungsachshülse (20) nach einem der Ansprüche 1 bis 3, wobei das erste nicht selbsthemmende Gewinde (21) ein Trapezgewinde ist.

5. Radbefestigungsachshülse (20) nach Anspruch 1, wobei das erste Ende der Achshülse (20) mit einer Gleitlagerstopfbuchsen-Befestigungsnut (25) versehen ist, und eine Vielzahl von Gewindelöchern an einer unteren Oberfläche der Gleitlagerstopfbuchsen-Befestigungsnut (25) in Intervallen angeordnet ist.

6. Radbefestigungsachshülse (20) nach Anspruch 1, wobei die Radbefestigungsbasis (24) eine Breite aufweist, die mit einer Breite einer Nabe eines Rades (30) übereinstimmt.

7. Radbefestigungsachshülse (20) nach Anspruch 1, wobei die Achshülse (20) eine äußere Oberfläche in einer dreistufigen Stufenform mit einem abnehmenden Durchmesser von dem ersten Ende zu dem zweiten Ende der Achshülse (20) aufweist.

8. Radsatz mit veränderlicher Spurweite, umfassend eine Achse (10), ein Paar von Rädern (30) und ein Paar von Radbefestigungsachshülsen (20) nach einem der Ansprüche 1 bis 7, wobei die ersten nicht selbsthemmenden Gewinde (21) des Paares von Radbefestigungsachshülsen (20) entgegengesetzte Drehrichtungen aufweisen, und das Paar von Rädern (30) an der Radbefestigungsbasis (24) des Paares von Achshülsen (20) befestigt ist; die Achse (10) mit zwei Abschnitten von zweiten nicht selbsthemmenden Gewinden (14) versehen ist, die jeweils ein nicht selbsthemmendes Gewindepaar mit dem ersten nicht selbsthemmenden Gewinde (21) in Intervallen bilden; und die Räder (30) an der Achse (10) über die Achshülsen (20) befestigt sind, und das erste nicht selbsthemmende Gewinde (21) mit dem zweiten nicht selbsthemmenden Gewinde (14) eingepasst und darauf abgestimmt ist.

9. Radsatz mit veränderlicher Spurweite nach Anspruch 8, wobei die Achse (10) ferner mit einem mittleren Durchgangsloch (15) versehen ist, das entlang einer axialen Richtung der Achse (10) bereitgestellt wird, ein äußerer Umfang der Achse (10) in der Nähe eines mittleren Teils derselben mit einem Abschnitt einer äußeren Keilwelle versehen ist, der sich in der axialen Richtung der Achse (10) erstreckt, und die äußere Keilwelle der Achse (11) mit einem Langloch (12) versehen ist, das sich radial durch die äußere Keilwelle hindurch erstreckt und eine Längsrichtung entlang der axialen Richtung der Achse (10) aufweist; mindestens ein erster Laufring (13), der umfangsmäßig um die Achse (10) herum angeordnet ist, in einer Position zwischen einem der zweiten nicht selbsthemmenden Gewinde (14) und der äußeren Keilwelle der Achse (11) bereitgestellt wird; und
der Radsatz mit veränderlicher Spurweite ferner eine äußere Hülse (40) umfasst, die äußere Hülse (40) außerhalb der Achse (10) ummantelt ist, ein innerer Umfang der äußeren Hülse (40) mit einem zweiten Laufring (41) versehen ist, der dem ersten Laufring (13) entspricht, der zweite Laufring (41) mit einem Rollelementbefestigungsloch versehen ist und in Einrastpassung mit dem ersten Laufring (13) bereitgestellt wird, um einen Wälzraum zu bilden, in dem ein Rollelement, das darauf abgestimmt ist, durch das Rollelementbefestigungsloch befestigt wird, so dass die äußere Hülse (40) außerhalb der Achse (10) drehbar verbunden ist, und eine innere Keilwelle, die auf die äußere Keilwelle an der Achshülse (20) abgestimmt ist, auf den beiden axialen Seiten des zweiten Laufrings (41) innerhalb der äußeren Hülse (40) bereitgestellt wird und sich in einem vorbestimmten Abstand von dem zweiten Laufring (41) befindet.

10. Radsatz mit veränderlicher Spurweite nach Anspruch 9, ferner umfassend einen Verriegelungsschleifring (60), einen Druckstift (80), ein elastisches Teil und einen Druckstab (90);
der Verriegelungsschleifring (60) ist gleitend an der äußeren Keilwelle der Achse (11) ummantelt, und der Verriegelungsschleifring (60) ist darin mit einer inneren Keilwelle, die auf die äußere Keilwelle der Achse (11) abgestimmt ist, versehen und ist extern mit einer äußeren Keilwelle, die auf die innere Keilwelle der äußeren Hülse (40) abgestimmt ist, versehen; eine innere Wand des Verriegelungsschleifrings (60) ist radial mit einem Paar von offenen Schlitzen versehen, die Öffnungen aufweisen, die mit einem Ende des Verriegelungsschleifrings (60) in Verbindung stehen; der Druckstift (80) geht durch das Langloch (12), und die beiden Enden des Druckstifts (80) stehen aus dem Langloch (12) über, und die beiden Enden des Druckstifts (80), die aus dem Langloch (12) überstehen, sind im Innern des Paares von offenen Schlitzen durch die Öffnungen der offenen Schlitze eingebettet; das elastische Teil wird an der Achse (10) ummantelt, wobei ein Ende an einer äußeren Wand des ersten Laufrings (13) anstößt, und das andere Ende an einem Ende des Verriegelungsschleifrings (60) von dem offenen Schlitz weg anstößt; und wenn sich das elastische Teil in einem natürlichen Zustand befindet, befindet sich die äußere Keilwelle außerhalb des Verriegelungsschleifrings (60) mindestens teilweise in der inneren Keilwelle einer entsprechenden Seite der äußeren Hülse (40), um die Drehung der äußeren Hülse (40) zu verriegeln; und
der Druckstab (90) weist ein Ende auf, das durch das mittlere Durchgangsloch (15) der Achse (10) hindurch eindringt und an einer Seite des Druckstifts (80) anstößt, auf der sich der offene Schlitz befindet, und sich das andere Ende bis zu einem Endteil des mittleren Durchgangslochs (15) erstreckt.

11. Radsatz mit veränderlicher Spurweite nach Anspruch 10, wobei der Radsatz mit veränderlicher Spurweite ferner einen Entriegelungsmechanismus (100) umfasst, der an einem Ende der Achse (10) befestigt ist, an dem sich der Druckstab (90) befindet; und
ein Achslagergehäuse (50) an jedem Ende der Achse (10) befestigt ist, das sich außerhalb des Paares von Rädern (30) befindet, und der Entriegelungsmechanismus (100) eine Befestigungsbasis und einen Schubkopf, der axial durch die Befestigungsbasis hindurch eindringt, umfasst; die Befestigungsbasis fest außerhalb des Achslagergehäuses (50) befestigt ist, und der Schubkopf gegenüber dem Druckstab (90) angeordnet ist.

12. Radsatz mit veränderlicher Spurweite nach Anspruch 10, wobei
das erste nicht selbsthemmende Gewinde (21) eine Länge aufweist, die größer als die Länge des zweiten nicht selbsthemmenden Gewindes (14) und gleich der Hälfte der zu ändernden Spurweite ist;
ein innerer Umfang der äußeren Hülse (40) mit einer ringförmigen Auskehlung an dem zweiten Laufring (41) versehen ist, und nachdem die äußere Hülse (40) mit der Achse (10) verbunden wurde, ein Paar von Befestigungsräumen für die Achshülsen (20) zwischen der äußeren Hülse (40) und der Achse (10) auf beiden axialen Seiten des Wälzraums gebildet wird; und
das elastische Teil eine Verriegelungsfeder (70) ist.

## Revendications

1. Manchon d'essieu de montage de roue (20) pour un ensemble de roues à écartement variable, dans lequel une circonférence externe d'une première extrémité du manchon d'essieu (20) est pourvue d'une base de montage de roue (24), et une circonférence externe d'une seconde extrémité du manchon d'essieu (20) est pourvue d'une section d'une cannelure extérieure s'étendant le long d'une direction axiale du manchon d'essieu (20), **caractérisé en ce qu'**une circonférence interne de la seconde extrémité du manchon d'essieu (20) est pourvue d'une section d'un premier filet non-autobloquant (21).

2. Manchon d'essieu de montage de roue (20) selon la revendication 1, dans lequel une rainure de montage de palier lisse (23) s'étendant de la première extrémité à la seconde extrémité du manchon d'essieu (20) est prévue sur une circonférence interne du manchon d'essieu (20) ; et
la rainure de montage de palier lisse (23) s'étend jusqu'à une position proche du premier filet non-autobloquant (21) et est configurée pour le montage d'un palier lisse (110).

3. Manchon d'essieu de montage de roue (20) selon la revendication 2, dans lequel la circonférence interne du manchon d'essieu (20) est pourvue d'une rainure de montage de bague d'étanchéité dans une position entre la rainure de montage de palier lisse (23) et le premier filet non-autobloquant (21).

4. Manchon d'essieu de montage de roue (20) selon l'une quelconque des revendications 1 à 3, dans lequel le premier filet non-autobloquant (21) est un filet trapézoïdal.

5. Manchon d'essieu de montage de roue (20) selon la revendication 1, dans lequel la première extrémité du manchon d'essieu (20) est munie d'une rainure de montage de presse-étoupe de palier lisse (25), et une pluralité de trous filetés sont disposés au niveau d'une surface inférieure de la rainure de montage de presse-étoupe de palier lisse (25) à des intervalles.

6. Manchon d'essieu de montage de roue (20) selon la revendication 1, dans lequel la base de montage de roue (24) présente une largeur compatible avec une largeur d'un moyeu d'une roue (30).

7. Manchon d'essieu de montage de roue (20) selon la revendication 1, dans lequel le manchon d'essieu (20) présente une surface externe en une forme étagée à trois étages avec un diamètre descendant de la première extrémité à la seconde extrémité du manchon d'essieu (20).

8. Ensemble de roues à écartement variable, comprenant un essieu (10), une paire de roues (30) et une paire de manchons d'essieu de montage de roue (20) selon l'une quelconque des revendications 1 à 7, dans lequel les premiers filets non-autobloquants (21) de la paire de manchons d'essieu de montage de roue (20) présentent des directions de rotation opposées, et les roues de la paire (30) sont fixées sur les bases de montage de roue (24) de la paire de manchons d'essieu (20) ; l'essieu (10) est pourvu de deux sections de seconds filets non-autobloquants (14) formant chacune une paire de filets non-autobloquants avec le premier filet non autobloquant (21) à des intervalles ; et les roues (30) sont montées sur l'essieu (10) à travers les manchons d'essieu (20), et le premier filet non-autobloquant (21) est ajusté et apparié avec le second filet non-autobloquant (14).

9. Ensemble de roues à écartement variable selon la revendication 8, dans lequel l'essieu (10) est en outre pourvu d'un trou traversant central (15) prévu le long d'une direction axiale de l'essieu (10), une circonférence externe de l'essieu (10) à proximité d'une partie médiane de celui-ci est pourvue d'une section de cannelure extérieure s'étendant dans la direction axiale de l'essieu (10), et la cannelure extérieure de l'essieu (11) est pourvue d'un trou oblong (12) s'étendant radialement à travers la cannelure extérieure et présentant une direction longitudinale le long de la direction axiale de l'essieu (10) ;
au moins un premier chemin de roulement (13) disposé circonférentiellement autour de l'essieu (10) est prévu dans une position entre l'un de seconds filets non-autobloquants (14) et la cannelure extérieure de l'essieu (11) ; et
l'ensemble de roues à écartement variable comprend en outre un manchon extérieur (40), le manchon extérieur (40) est manchonné à l'extérieur de l'essieu (10), une circonférence interne du manchon extérieur (40) est pourvue d'un second chemin de roulement (41) correspondant au premier chemin de roulement (13), le second chemin de roulement (41) est pourvu d'un trou de montage d'élément de roulement et en encliquetage avec le premier chemin de roulement (13) pour former un espace de roulement dans lequel un élément de roulement apparié avec celui-ci est monté à travers le trou de montage d'élément de roulement, de telle sorte que le manchon extérieur (40) est connecté de manière rotative à l'extérieur de l'essieu (10), et une cannelure intérieure appariée avec la cannelure extérieure sur le manchon d'essieu (20) est prévue sur les deux côtés axiaux du second chemin de roulement (41) à l'intérieur du manchon extérieur (40) et située à une distance prédéterminée du second chemin de roulement (41).

10. Ensemble de roues à écartement variable selon la revendication 9, comprenant en outre une bague collectrice de verrouillage (60), une broche de poussée (80), une pièce élastique et une tige de poussée (90) ;
la bague collectrice de verrouillage (60) est manchonnée de manière coulissante au niveau de la cannelure extérieure de l'essieu (11), et la bague collectrice de verrouillage (60) est pourvue à l'intérieur d'une cannelure intérieure appariée à la cannelure extérieure de l'essieu (11), et pourvue à l'extérieur d'une cannelure extérieure appariée à la cannelure intérieure du manchon extérieur (40) ; une paroi intérieure de la bague collectrice de verrouillage (60) est pourvue radialement d'une paire de fentes ouvertes présentant des ouvertures mises en communication avec une extrémité de la bague collectrice de verrouillage (60) ; la broche de poussée (80) passe à travers le trou oblong (12), et les deux extrémités de la broche de poussée (80) font saillie à partir du trou oblong (12) et les deux extrémités de la broche de poussée (80) faisant saillie à partir du trou oblong (12) sont encastrées à l'intérieur de la paire de fentes ouvertes par les ouvertures des fentes ouvertes ; la pièce élastique est manchonnée sur l'essieu (10), présentant une extrémité mise en butée contre une paroi extérieure du premier chemin de roulement (13), et l'autre extrémité mise en butée contre une extrémité de la bague collectrice de verrouillage (60) éloignée de la fente ouverte ; et lorsque la pièce élastique est dans un état naturel, la cannelure extérieure à l'extérieur de la bague collectrice de verrouillage (60) est au moins partiellement située dans la cannelure intérieure d'un côté correspondant du manchon extérieur (40) pour verrouiller la rotation du manchon extérieur (40) ; et
la tige de poussée (90) présente une extrémité pénétrant à travers le trou traversant central (15) de l'essieu (10) et mise en butée contre un côté de la broche de poussée (80) au niveau duquel la fente ouverte est située, et l'autre extrémité s'étendant vers une partie d'extrémité du trou traversant central (15).

11. Ensemble de roues à écartement variable selon la revendication 10, dans lequel l'ensemble de roues à écartement variable comprend en outre un mécanisme de déverrouillage (100) monté au niveau d'une extrémité de l'essieu (10) où la tige de poussée (90) est située ; et
un corps de boîte d'essieu (50) est monté à chaque extrémité de l'essieu (10), situé à l'extérieur de la paire de roues (30), et le mécanisme de déverrouillage (100) comprend une base de montage et une tête de poussée pénétrant axialement à travers la base de montage ; la base de montage est montée de manière fixe à l'extérieur du corps de boîte d'essieu (50) et la tête de poussée est disposée à l'opposé de la tige de poussée (90).

12. Ensemble de roues à écartement variable selon la revendication 10, dans lequel
le premier filet non-autobloquant (21) présente une longueur supérieure à la longueur du second filet non-autobloquant (14) et égale à la moitié de l'écartement à changer ;
une circonférence interne du manchon extérieur (40) est pourvue d'un bossage annulaire au niveau du second chemin de roulement (41), et après que le manchon extérieur (40) soit relié à l'essieu (10), une paire d'espaces de montage pour les manchons d'essieu (20) est formée entre le manchon extérieur (40) et l'essieu (10) au niveau des deux côtés axiaux de l'espace de roulement ; et
la pièce élastique est un ressort de verrouillage (70).
